# EUROPEAN PATENT APPLICATION

(11) **EP 2 858 442 A1**
(43) Date of publication of application: **08.04.2015**
(21) Application number: 14740677.1
(22) Date of filing: 04.01.2014
(51) Int. Cl.: H04W 72/04

(54) **ENHANCED PHYSICAL DOWNLINK CONTROL CHANNEL TRANSMISSION METHOD AND DEVICE AND COMMUNICATION SYSTEM**

(30) Priority: 18.01.2013 CN 201310019948
(71) Applicant: Huawei Device Co., Ltd., Longgang District Shenzhen Guangdong 518129 (CN)
(72) Inventor: WANG, Jian, Shenzhen Guangdong 518129 (CN); CHENG, Yan, Shenzhen Guangdong 518129 (CN)
(74) Representative: Körber, Martin Hans
(86) International application number: PCT/CN2014/070125
(87) International publication number: WO 2014/110987

(57) **Abstract**

Embodiments of the present invention disclose an enhanced physical downlink control channel transmission method and apparatus, and a communications system, which are used to configure at least two different types of EPDCCHs for multiple subframes of a data frame and are applicable to subframe configurations of different subframes, so as to avoid an EPDCCH transmission error. The method provided in an embodiment of the present invention includes: generating, by a base station, a correspondence between an enhanced physical downlink control channel EPDCCH and a subframe for each user equipment UE, where the correspondence between an EPDCCH and a subframe includes at least two different types of EPDCCHs and a subframe corresponding to each type of EPDCCH, and the subframes are multiple subframes of a data frame; and delivering, by the base station, the correspondence between an EPDCCH and a subframe to the UE, so that the UE obtains, according to the correspondence between an EPDCCH and a subframe, an EPDCCH used by each subframe of the data frame.

## Description

This application claims priority to Chinese Patent Application No. CN201310019948.7, filed with the Chinese Patent Office on January 18, 2013 and entitled "ENHANCED PHYSICAL DOWNLINK CONTROL CHANNEL TRANSMISSION METHOD AND APPARATUS, AND COMMUNICATIONS SYSTEM", which is incorporated herein by reference in its entirety.

### TECHNICAL FIELD

The present invention relates to the field of communications technologies, and in particular, to an enhanced physical downlink control channel (EPDCCH, Enhanced Physical Downlink Control Channel) transmission method and apparatus, and a communications system.

### BACKGROUND

In a heterogeneous network, a macrocell (Macro, Macrocell) imposes relatively great interference on a microcell (Micro, Microcell). Signal interference from the macrocell causes a decrease in a signal-to-noise ratio of a user served by the microcell. For a physical downlink shared channel (PDSCH, Physical Downlink Shared Channel), a throughput of a user in the microcell is affected; for a physical downlink control channel (PDCCH, Physical Downlink Control Channel), reliability of receiving control information is affected. Unlike reliability of transmitting data information, reliability of transmitting the control information cannot be increased by means of retransmission, and failure in receiving the control information directly leads to failure in transmitting data information corresponding to the control information. Therefore, enhancing reliability of transmitting the control information in the heterogeneous network becomes a pressing issue in a wireless communications system.

An enhanced physical downlink control channel (EPDCCH, Enhanced Physical Downlink Control Channel) is introduced in the 3rd Generation Partnership Project (3GPP, The 3rd Generation Partnership Project) Release (REL, Release) .11. The EPDCCH differs from the PDCCH in that the EPDCCH is multiplexed together with the PDSCH by means of frequency multiplex. By means of scheduling coordination between the macrocell and the microcell, interference caused by the macrocell to an EPDCCH of the microcell can be avoided. For example, physical resource blocks (PRB, Physical Resource Block) PRB #1, PRB #2, and PRB #3 are configured as the EPDCCHs in the microcell, and then the macrocell may not perform PDSCH scheduling in the PRB #1, PRB #2, and PRB #3, thereby avoiding interference caused by the macrocell to the EPDCCH of the microcell.

In an existing 3GPP standard process, the reliability of receiving the control information in the heterogeneous network can be increased by using the EPDCCH. In the prior art, a method used when a base station delivers an EPDCCH to a user equipment is as follows: The base station delivers a unified default EPDCCH by using higher-layer signaling, and the user equipment (UE, User Equipment) detects a subframe of the EPDCCH by using a method of collaborating with a default behavior. Only the default EPDCCH in a unified format can be delivered, which is not applicable to every type of subframe configuration, and tends to cause a transmission error.

### SUMMARY

Embodiments of the present invention provide an enhanced physical downlink control channel transmission method and apparatus, and a communications system, which are used to configure at least two different types of EPDCCHs for multiple subframes of a data frame and are applicable to subframe configurations of different subframes, so as to avoid an EPDCCH transmission error.

To solve the foregoing technical problems, the embodiments of the present invention provide the following technical solutions:

According to a first aspect, an embodiment of the present invention provides an enhanced physical downlink control channel transmission method, where the method includes:
generating, by a base station, a correspondence between an enhanced physical downlink control channel EPDCCH and a subframe for each user equipment UE, where the correspondence between an EPDCCH and a subframe includes at least two different types of EPDCCHs and a subframe corresponding to each type of EPDCCH, and the subframes are multiple subframes of a data frame; and
delivering, by the base station, the correspondence between an EPDCCH and a subframe to the UE, so that the UE obtains, according to the correspondence between an EPDCCH and a subframe, an EPDCCH used by each subframe of the data frame.

With reference to the first aspect, in a first possible implementation manner of the first aspect, the two different types of EPDCCHs are specifically that:
configuration parameters of the two types of EPDCCHs are different, where each type of EPDCCH includes at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, and that configuration parameters are different means that content of at least one type of configuration parameter is different among all configuration parameters of the two types of EPDCCHs.

With reference to the first aspect or the first possible implementation manner of the first aspect, in a second possible implementation manner, the generating, by a base station, a correspondence between an enhanced physical downlink control channel EPDCCH and a subframe for each user equipment UE includes:
separately generating, by the base station by using a bitmap BitMap method, a correspondence between each type of EPDCCH of the at least two different types of EPDCCHs and a subframe, of the data frame, that uses the type of EPDCCH; or
separately generating, by the base station by performing a remainder operation on a subframe number, a correspondence between each type of EPDCCH of the at least two different types of EPDCCHs and a subframe, of the data frame, that uses the type of EPDCCH; or
separately generating, by the base station by performing a remainder operation on a frame number, a correspondence between each type of EPDCCH of the at least two different types of EPDCCHs and a subframe, of the data frame, that uses the type of EPDCCH.

With reference to the first aspect or the first possible implementation manner of the first aspect, in a third possible implementation manner, the delivering, by the base station, the correspondence between an EPDCCH and a subframe to the user equipment UE includes:
sending, by the base station, the correspondence between an EPDCCH and a subframe to the UE by using radio resource control protocol RRC signaling; or
sending, by the base station, the correspondence between an EPDCCH and a subframe to the UE by using master information block MIB signaling; or
sending, by the base station, the correspondence between an EPDCCH and a subframe to the UE by using system information block SIB signaling.

According to a second aspect, an embodiment of the present invention further provides another enhanced physical downlink control channel transmission method, where the method includes:
generating, by a base station, a correspondence between a first subframe and a first enhanced physical downlink control channel EPDCCH for each user equipment UE, where the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station; and
delivering, by the base station, the correspondence between the first subframe and the first EPDCCH to the UE.

With reference to the second aspect, in a first possible implementation manner of the second aspect, generating, by the base station, a correspondence between the second subframe and the second EPDCCH for each UE, where the second subframe is a subframe that does not include the first subframe of the data frame and needs to use the EPDCCH.

According to a third aspect, an embodiment of the present invention further provides another enhanced physical downlink control channel transmission method, where the method includes:
receiving, by a user equipment UE, a correspondence between an enhanced physical downlink control channel EPDCCH and a subframe, where the correspondence is sent by a base station and includes at least two different types of EPDCCHs and a subframe corresponding to each type of EPDCCH, and the subframes are multiple subframes of a data frame; and
separately obtaining, by the UE according to the correspondence, an EPDCCH used by each subframe of the data frame.

According to a fourth aspect, an embodiment of the present invention further provides another enhanced physical downlink control channel transmission method, where the method includes:
receiving, by a user equipment UE, a correspondence between a first subframe and a first enhanced physical downlink control channel EPDCCH, where the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station;
separately obtaining, by the UE according to the correspondence, the first EPDCCH used by the first subframe of the data frame; and
separately obtaining, by the UE according to the default EPDCCH, the second EPDCCH used by the second subframe of the data frame.

According to a fifth aspect, an embodiment of the present invention further provides a base station, where the base station includes:
a generating unit, configured to generate a correspondence between an enhanced physical downlink control channel EPDCCH and a subframe for each user equipment UE, where the correspondence between an EPDCCH and a subframe includes at least two different types of EPDCCHs and a subframe corresponding to each type of EPDCCH, and the subframes are multiple subframes of a data frame; and
a sending unit, configured to deliver the correspondence between an EPDCCH and a subframe to the UE, so that the UE obtains, according to the correspondence between an EPDCCH and a subframe, an EPDCCH used by each subframe of the data frame.

According to a sixth aspect, an embodiment of the present invention further provides another base station, where the base station includes:
a generating unit, configured to generate a correspondence between a first subframe and a first enhanced physical downlink control channel EPDCCH for each user equipment UE, where the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station; and
a sending unit, configured to deliver the correspondence between the first subframe and the first EPDCCH to the UE.

According to a seventh aspect, an embodiment of the present invention further provides a user equipment, where the user equipment includes:
a receiving unit, configured to receive a correspondence between an enhanced physical downlink control channel EPDCCH and a subframe, where the correspondence is sent by a base station and includes at least two different types of EPDCCHs and a subframe corresponding to each type of EPDCCH, and the subframes are multiple subframes of a data frame; and
an EPDCCH obtaining unit, configured to separately obtain, according to the correspondence, an EPDCCH used by each subframe of the data frame.

According to an eighth aspect, an embodiment of the present invention further provides another user equipment, where the user equipment includes:
a receiving unit, configured to receive a correspondence between a first subframe and a first enhanced physical downlink control channel EPDCCH, where the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station;
a first EPDCCH obtaining unit, configured to separately obtain, according to the correspondence, the first EPDCCH used by the first subframe of the data frame; and
a second EPDCCH obtaining unit, configured to separately obtain, according to the default EPDCCH, the second EPDCCH used by the second subframe of the data frame.

According to a ninth aspect, an embodiment of the present invention further provides a communications system, where the communications system includes:
the base station described in the fifth aspect and the user equipment described in the seventh aspect.

According to a tenth aspect, an embodiment of the present invention further provides another communications system, where the communications system includes:
the base station described in the sixth aspect and the user equipment described in the eighth aspect.

It can be learned from the foregoing technical solutions that the embodiments of the present invention have the following advantages:

In one embodiment provided in the present invention, a base station generates a correspondence between an EPDCCH and a subframe for each UE. In the correspondence between an EPDCCH and a subframe, which is generated by the base station, at least two different types of EPDCCHs are configured for multiple subframes of a data frame. Finally, the base station sends the correspondence to the UE, and the UE can obtain, according to the correspondence, the different EPDCCHs used by the multiple subframes. Because the base station configures at least two different types of EPDCCHs for multiple subframes, instead of a unified default EPDCCH used by all the subframes, different EPDCCHs can be delivered according to different subframe configurations of specific subframes, thereby avoiding an EPDCCH error.

In another embodiment provided in the present invention, a base station generates a correspondence between a first subframe and a first EPDCCH for each UE, where the base station configures the first EPDCCH for the first subframe of a data frame and generates the correspondence between the first subframe and the first EPDCCH, and the first EPDCCH is different from a second EPDCCH. Then the base station sends the correspondence between the first subframe and the first EPDCCH to the UE, and the UE can obtain, according to the correspondence between the first subframe and the first EPDCCH, the first EPDCCH used by the first subframe. Because the base station configures the first EPDCCH and the second EPDCCH that are different from each other for subframes, instead of a unified default EPDCCH used by all the subframes, different EPDCCHs can be delivered according to different subframe configurations of specific subframes, thereby avoiding an EPDCCH error.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings.
FIG. 1 is a schematic diagram of a frame structure of a data frame in the prior art;
FIG. 2 is a schematic diagram of frame structure composition of another data frame in the prior art;
FIG. 3 is a schematic block diagram of a process of an enhanced physical downlink control channel transmission method according to an embodiment of the present invention;
FIG. 4 is a schematic diagram of a frame structure of a data frame according to an embodiment of the present invention;
FIG. 5 is a schematic diagram of a frame structure of another data frame according to an embodiment of the present invention;
FIG. 6 is a schematic diagram of a frame structure of another data frame according to an embodiment of the present invention;
FIG. 7 is a schematic diagram of a frame structure of another data frame according to an embodiment of the present invention;
FIG. 8 is a schematic block diagram of a process of another enhanced physical downlink control channel transmission method according to an embodiment of the present invention;
FIG. 9 is a schematic block diagram of a process of another enhanced physical downlink control channel transmission method according to an embodiment of the present invention;
FIG. 10 is a schematic block diagram of a process of another enhanced physical downlink control channel transmission method according to an embodiment of the present invention;
FIG. 11 is a schematic structural diagram of composition of a base station according to an embodiment of the present invention;
FIG. 12 is a schematic structural diagram of composition of another base station according to an embodiment of the present invention;
FIG. 13 is a schematic structural diagram of composition of a user equipment according to an embodiment of the present invention;
FIG. 14 is a schematic structural diagram of composition of another user equipment according to an embodiment of the present invention;
FIG. 15 is a schematic structural diagram of composition of a communications system according to an embodiment of the present invention; and
FIG. 16 is a schematic structural diagram of composition of another base station according to an embodiment of the present invention.

### DESCRIPTION OF EMBODIMENTS

Embodiments of the present invention provide an enhanced physical downlink control channel transmission method and apparatus, and a communications system, which are used to configure at least two different types of EPDCCHs for multiple subframes of a data frame and are applicable to subframe configurations of different subframes, so as to avoid an EPDCCH transmission error.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely some but not all of the embodiments of the present invention. All other embodiments obtained by a person skilled in the art based on the embodiments of the present invention shall fall within the protection scope of the present invention.

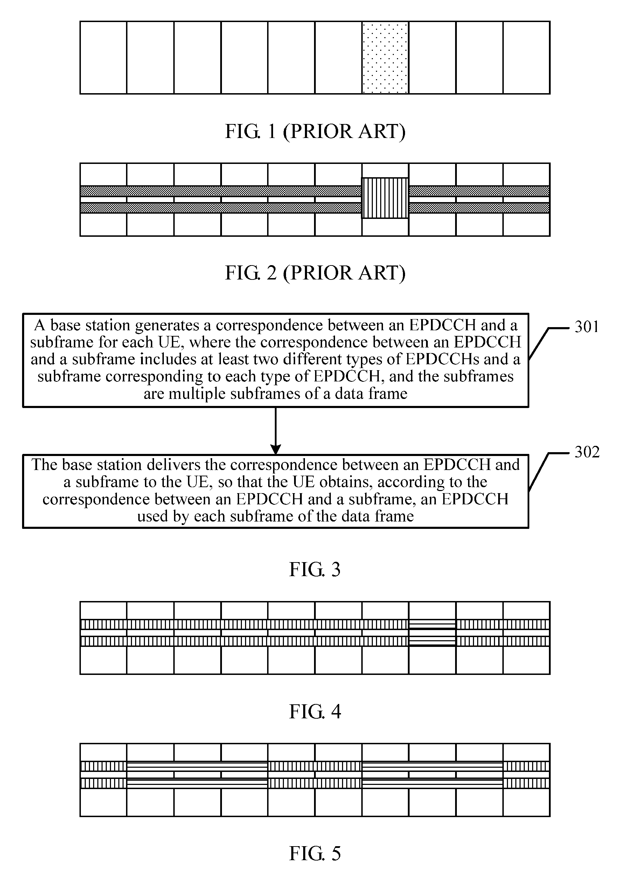

In an actual Long Term Evolution (LTE, Long Term Evolution) system, different subframes have different subframe configurations, so that different subframes need to have different EPDCCHs. In the prior art, a base station always delivers a unified default EPDCCH. In this case, configurations of the EPDCCH are always the same if EPDCCH resources need to be configured for any type of subframe, which does not take subframe configurations of different types of subframes into account and inevitably leads to an EPDCCH transmission error. For example, in an LTE system, one downlink frame is divided into 10 subframes. Among the 10 subframes, some subframes may be configured as multicast channel (PMCH, Physical multicast channel) subframes for transmitting a multicast service. For example, as shown in FIG. 1, the 7^{th} subframe of the downlink frame is configured as a subframe for transmitting a multicast service of a PMCH. In an LTE system R8-11, when one subframe is used as a multicast service subframe, a PMCH and a PDCCH are multiplexed in a time division multiplexing manner. The PMCH occupies a symbol following the subframe, and occupies all bandwidth of the symbol. According to an implementation manner in the prior art, the base station delivers a default EPDCCH for the 10 subframes uniformly. However, the EPDCCH is multiplexed with a traffic channel in a frequency division multiplexing manner, which means that there is no space available for transmitting the EPDCCH if one subframe is a PMCH subframe, thereby inevitably leading to an EPDCCH transmission error. In REL.12, a solution to a new carrier type is put forward: On a carrier of the new carrier type, the PMCH does not occupy all frequency resources of a multicast service subframe; therefore, remaining resources in a frequency domain are available for accommodating the EPDCCH. As shown in FIG. 2, on the 7^{th} subframe, the PMCH occupies only some frequency domain resources, and remaining resources are available for configuring the EPDCCH. However, a problem that still exists is: Even if the PMCH occupies some frequency domain resources so that remaining frequency domain resources can be reserved for the EPDCCH, an EPDCCH transmission error may still occur because it is impossible for an EPDCCH configured for another subframe to exactly fall on the remaining resources of the PMCH subframe.

An embodiment of the present invention provides an enhanced physical downlink control channel transmission method. As shown in FIG. 3, the method may specifically include the following steps:

301. A base station generates a correspondence between an enhanced physical downlink control channel (EPDCCH, Enhanced Physical Downlink Control Channel) and a subframe for each user equipment (UE, User Equipment), where the correspondence between an EPDCCH and a subframe includes at least two different types of EPDCCHs and a subframe corresponding to each type of EPDCCH, and the subframes are multiple subframes of a data frame.

In this embodiment of the present invention, for an LTE wireless communications system, the data frame includes multiple subframes, and a subframe configuration of each subframe may be different. For example, different services may be configured for different subframes, and different reference signals may also be configured for different subframes. Different service configurations may cause different physical resource block groups, which are available for EPDCCH transmission, in different subframes; different reference signal configurations may also cause different resource elements (RE, Resource Element) except reference signals in the physical resource block groups in different subframes. In the prior art, when an EPDCCH is configured, a subframe configuration of a specific subframe is not taken into account, and instead a unified default EPDCCH is delivered, which is inevitably inadaptable to specific conditions of various subframes and tends to cause an EPDCCH transmission error.

In this embodiment of the present invention, the base station configures at least two different types of EPDCCHs for multiple subframes of the data frame. In this way, the base station can configure different EPDCCHs according to different subframe configurations of specific subframes, thereby avoiding an EPDCCH error. Three subframes included in the data frame are used as an example for description. The three subframes are a subframe 1, a subframe 2, and a subframe 3. In this case, the base station may configure two different types of EPDCCHs for the three subframes of the data frame, which may specifically be as follows: The base station configures an EPDCCH 1 for the subframe 1 and the subframe 2, and configures an EPDCCH 2 for the subframe 3, where the EPDCCH 1 and the EPDCCH 2 represent different EPDCCHs. The base station may also configure three different types of EPDCCHs for the three subframes of the data frame, which may specifically be as follows: The base station configures an EPDCCH 1 for the subframe 1, and configures an EPDCCH 2 for the subframe 2, and the base station configures an EPDCCH 3 for the subframe 3, where the EPDCCH 1, the EPDCCH 2, and the EPDCCH 3 represent different EPDCCHs.

In this embodiment of the present invention, the correspondence generated by the base station may be indicated in a same table, and may also be indicated in more than two tables separately according to different EPDCCHs. Using a table to indicate the correspondence is further expounded according to the example provided in the foregoing paragraph. First, the correspondence being indicated in the same table is used as an example. As shown in the following Table 1, it indicates correspondences between the EPDCCH 1 and the subframe 1 and the subframe 2, and a correspondence between the EPDCCH 2 and the subframe 3, where the correspondences are generated by the base station.

**Table 1 Correspondences indicated in a same table**

| **EPDCCH type** | **Subframe corresponding to the EPDCCH** |
|---|---|
| EPDCCH1 | Subframe 1 |
| EPDCCH1 | Subframe 2 |
| EPDCCH2 | Subframe 3 |

Two columns in a same row in Table 1 separately indicate the subframes corresponding to the EPDCCHs.

The following gives an example in which the correspondences are indicated in more than two tables separately according to different EPDCCHs. As shown in the following Table 2, it indicates the correspondences between the EPDCCH 1 and the subframe 1 and the subframe 2, and as shown in the following Table 3, it indicates the correspondence between the EPDCCH 2 and the subframe 3, where the correspondences are generated by the base station.

**Table 2 Correspondences between the EPDCCH 1 and the subframe 1 and the subframe 2**

| **EPDCCH type** | **Subframe corresponding to the EPDCCH** |
|---|---|
| EPDCCH1 | Subframe 1 |
| EPDCCH1 | Subframe 2 |

**Table 3 Correspondence between the EPDCCH 2 and the subframe 3**

| **EPDCCHtype** | **Subframe corresponding to the EPDCCH** |
|---|---|
| EPDCCH2 | Subframe 3 |

It should be noted that in this embodiment of the present invention, the two different types of EPDCCHs may specifically mean that configuration parameters of the two types of EPDCCHs are different, where each type of EPDCCH includes at least any one of the following types of configuration parameters: an EPDCCH scrambling sequence, a configuration of search space, the number of enhanced resource element groups (EREG, Enhanced resource element group) that form an enhanced control channel element (ECCE, Enhanced Control Channel Element), a start symbol of an EPDCCH region, a subframe location that needs to detects the EPDCCH, a scrambling sequence of a demodulation reference signal (DMRS, Demodulation Reference Signal), and a definition of an EPDCCH quasi co-location (QCL, Quasi Collocation) behavior, and that configuration parameters are different means that content of at least one type of configuration parameter is different among all configuration parameters of the two types of EPDCCHs.

That is, the base station configures more than one type of EPDCCH for multiple subframes. The more than one type of EPDCCH means that the configured EPDCCHs are different, and that the EPDCCHs are different herein means that content of at least one type of configuration parameter is different among the configuration parameters of the configured EPDCCHs. It should be noted that in this embodiment of the present invention, that the content of the configuration parameters is different may specifically mean that values of the configuration parameters are different or specific connotations of the configuration parameters are different.

For the six types of configuration parameters included in the EPDCCH, the following should be noted:
(1) For the EPDCCH scrambling sequence, if the scrambling sequences of the two types of EPDCCHs are different, the two types of EPDCCHs are different.
(2) The configuration of search space is enhanced physical downlink control channel-physical resource block configuration (EPDCCH-PRB-SET(s)), where the configuration includes the number of EPDCCH-PRB-SETs, whether each EPDCCH-PRB-SET is corresponding to a distributed (Distributed) EPDCCH or a localized (Localized) EPDCCH, the number of physical resource block pairs (PRB Pair) included in each EPDCCH-PRB-SET, and a specific location of the PRB Pair corresponding to each EPDCCH-PRB-SET.
(3) The number of EREGs that form the ECCE includes two possible values, namely, 4 and 8.
(4) The start symbol of the EPDCCH region is used to indicate a start position of the EPDCCH in the subframe.
(5) Scrambling sequence of the DMRS.
(6) For the definition of the EPDCCH QCL behavior, different subframes may have different QCL behaviors.

According to the following description of the configuration parameters of the EPDCCHs, so long as multiple types of EPDCCHs have at least one different type of configuration parameter, it indicates that the EPDCCHs are different. Two types of EPDCCHs are used as an example for description. Each type of EPDCCH includes the configuration parameters (1) to (6). It can be defined that the two types of EPDCCHs are different EPDCCHs so long as they have one configuration parameter, of the configuration parameters (1) to (6), with different content, or it can also be defined that the two types of EPDCCHs are different EPDCCHs if they have two configuration parameters, of the configuration parameters (1) to (6), with different content, or it can also be defined that the two types of EPDCCHs are different EPDCCHs if they have three configuration parameters, of the configuration parameters (1) to (6), with different content, or it can also be defined that the two types of EPDCCHs are different EPDCCHs if they have four configuration parameters, of the configuration parameters (1) to (6), with different content, and the like.

In order to describe in detail that content of configuration parameters included in different EPDCCHs is different, a practical application example is used in the following.

First, different configurations of search space are used to indicate different EPDCCHs.

As shown in FIG. 4, a data frame includes 10 subframes, where an EPDCCH type of each of the 1^{st}, 2^{nd}, 3^{rd}, 4^{th}, 5^{th}, 6^{th}, 7^{th}, 9^{th}, and 10^{th} subframes is a distributed (distributed) type, and is represented by a vertical lined area in FIG. 4; an EPDCCH type of the 8^{th} subframe is a localized (localized) type, and is represented by a horizontal lined area in FIG. 4. The difference in the configurations of the search space indicates difference in the EPDCCH types. A reason for such a configuration is that EPDCCH resources of different subframes may come from different signal transmission points (TP, TransmissionPoint), and different TPs may be suitable for different EPDCCH transmission modes. For example, for some TPs, the UE has channel prior information of the TPs, and therefore the EPDCCH is suitable for a localized transmission mode. However, for some TPs, the UE does not have channel prior information of the TPs, and in this case, the EPDCCH is suitable for a distributed transmission mode. When the configurations of the search space are different, it indicates that the EPDCCHs are different.

In the following description, different start symbols are used to indicate different EPDCCHs.

As shown in FIG. 5, a data frame includes 10 subframes, where a start position of an EPDCCH on each of the 1^{st}, 5^{th}, 6^{th}, and 10^{th} subframes is the 3^{rd} symbol on each subframe, and is represented by a vertical lined area in FIG. 5; a start position of an EPDCCH on each of the 2^{nd}, 3^{rd}, 4^{th}, 7^{th}, 8^{th}, and 9^{th} subframes is the 4^{th} symbol on each sub frame, and is represented by a horizontal lined area in FIG. 5. The start positions of the EPDCCHs configured for different subframes are different. A reason for such a configuration is that transmission modes configured for different subframes may be different. For example, a single transmission point (TP) mode is configured for the 1^{st}, 5^{th}, 6^{th}, and 10^{th} subframes, and a start symbol of the EPDCCH may be near the header. For example, the EPDCCH transmission starts in the 1^{st}, 2^{nd}, or 3^{rd} symbol. A coordinated multi-point transmission (CoMP, Cooperation Multi-Point) mode is configured for the 2^{nd}, 3^{rd}, 4^{th}, 7^{th}, 8^{th}, and 9^{th} subframes. In this case, the start symbol of the EPDCCH may need to be near the end. For example, the EPDCCH transmission starts in the 4^{th} symbol. When the start symbols of the EPDCCH regions are different, it indicates that the EPDCCHs are different.

In the following description, different QCL behaviors are used to indicate different EPDCCHs.

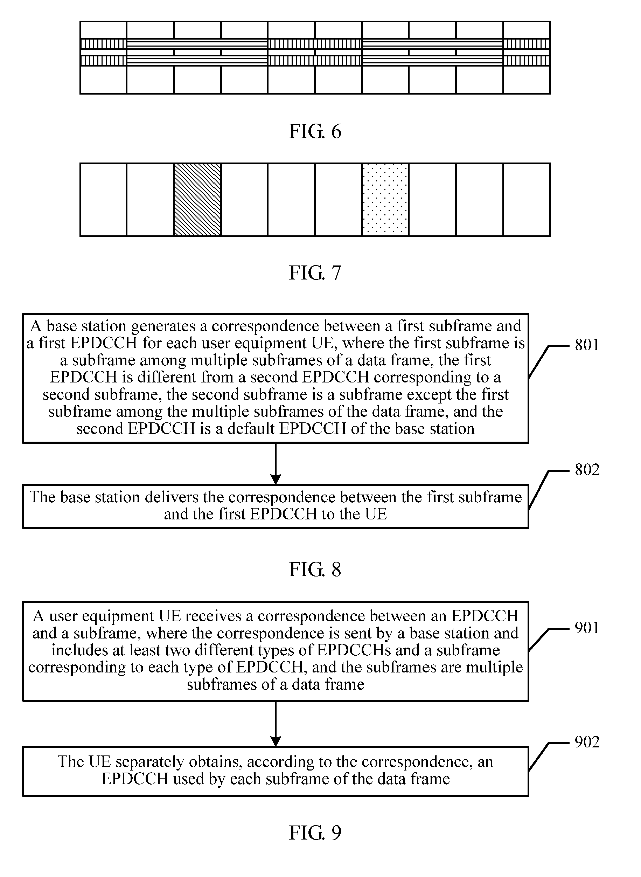

As shown in FIG. 6, a data frame includes 10 subframes, where a QCL behavior of an EPDCCH on each of the 1^{st}, 5^{th}, 6^{th}, and 10^{th} subframes is a behavior A, and is represented by a vertical lined area in FIG. 6; a behavior of an EPDCCH on each of the 2^{nd}, 3^{rd}, 4^{th}, 7^{th}, 8^{th}, and 9^{th} subframes is a behavior B, and is represented by a horizontal lined area in FIG. 6. A reason for such a configuration is that transmission points configured for different subframes may be different. For example, transmission points configured for the 1^{st}, 5^{th}, 6^{th}, and 10^{th} subframes are from a macro base station configured with a common reference signal (CRS, Common Reference Signal); in this case, the behavior A may be used to enhance reliability of receiving the EDPCCHs. Transmission points configured for the 2^{nd}, 3^{rd}, 4^{th}, 7^{th}, 8^{th}, and 9^{th} subframes are from a micro base station that does not provide a CRS signal; in this case, the behavior B is used for EPDCCH receiving.

It should be noted that the foregoing embodiment merely describes that the EPDCCHs are different when the EPDCCHs include one different type of configuration parameter. However, the EPDCCHs may also be different when multiple types of configuration parameters are different.

It should be noted that the correspondence generated by the base station reflects that each type of EPDCCH is corresponding to a subframe, of the data frame, that uses the type of EPDCCH, which specifically includes: each type of EPDCCH being corresponding to at least one subframe among multiple subframes of the data frame.

In this embodiment of the present invention, the base station configures at least two different types of EPDCCHs for multiple subframes, and the base station generates a correspondence between the EPDCCH and the subframe, where the correspondence includes the at least two different types of EPDCCHs and the subframe corresponding to each type of EPDCCH. For example, the base station configures three different types of EPDCCHs for four subframes (specifically, a subframe 1, a subframe 2, a subframe 3, and a subframe 4), where the three different types of EPDCCHs are an EPDCCH 1, an EPDCCH 2, and an EPDCCH 3. After the EPDCCHs are configured, the base station generates correspondences between the subframe 1 and the subframe 2 and the EPDCCH 1, that is, the base station specifies that the configured EPDCCH 1 is used on the subframe 1 and the subframe 2; the base station generates a correspondence between the subframe 3 and the EPDCCH 2, that is, the base station specifies that the configured EPDCCH 2 is used on the subframe 3; the base station generates a correspondence between the subframe 4 and the EPDCCH 3, that is, the base station specifies that the configured EPDCCH 3 is used on the subframe 4. The subframe 1 and the subframe 2 are subframes that use the EPDCCH 1, the subframe 3 is a subframe that uses the EPDCCH 2, and the subframe 4 is a subframe that uses the EPDCCH 3. When the correspondences between the EPDCCHs and the subframes are generated, in this example, the correspondences include the EPDCCHs used by the subframe 1, the subframe 2, the subframe 3, and the subframe 4 separately, and the UE can obtain, according to the correspondences, the EPDCCHs used by all the subframes.

It should be noted that in this embodiment of the present invention, the base station generates the correspondence between the enhanced physical downlink control channel EPDCCH and the subframe for each user equipment UE in multiple implementation manners. As one of the implementation manners, step 302 may specifically include:
separately generating, by the base station by using a bitmap (BitMap) method, a correspondence between each type of EPDCCH of the at least two different types of EPDCCHs and a subframe, of the data frame, that uses the type of EPDCCH.

The BitMap method is to use a bit to mark a type of EPDCCH corresponding to a subframe that uses the type of EPDCCH.

A practical application example is used in the following description:

The base station uses a manner in which multiple EPDCCHs are configured independently. Configuration of three types of EPDCCHs is used as an example; however, this embodiment is not limited to the configuration of the three types of EPDCCHs. As shown in FIG. 7, a data frame includes 10 subframes, where the 3^{rd} subframe is configured to transmit a channel state information-reference signal (CSI-RS, Channel State Information-Reference Signal), which is represented by an oblique lined area in FIG. 7; the 7^{th} subframe is configured as a multicast channel (PMCH, Physical multicast channel) subframe for transmitting a multicast service. EPDCCHs need to be configured for both the 3^{rd} subframe and the 7^{th} subframe independently and are different from EPDCCHs configured for other subframes except the 3^{rd} subframe and the 7^{th} subframe.

As mentioned above, different EPDCCHs mean that the configuration parameters of the EPDCCHs are different, where the configuration parameters include but are not limited to the 6 types of configuration parameters described above. Different EPDCCHs may be configured for different subframes, so long as the EPDCCHs have, among the configuration parameters, different configuration parameters. In the following embodiment, different EPDCCHs mean that physical resources occupied by the EPDCCHs are different. In another application scenario, different EPDCCHs may also mean different scrambling sequences, or different types of EPDCCHs (such as a distributed EPDCCH or a localized EPDCCH), or different start positions of the EPDCCHs, or different QCL behaviors of the EPDCCHs, or a combination of the foregoing configuration parameters.

In FIG. 7, an EPDCCH 1 is configured for each of the 1^{st}, 2^{nd}, 4^{th}, 5^{th}, 6^{th}, 8^{th}, 9^{th}, and 10^{th} subframes, an EPDCCH 2 is configured for the 3^{rd} subframe, and an EPDCCH 3 is configured for the 7^{th} subframe.

The base station configures the EPDCCH 1, and makes it correspond to the 1^{st}, 2^{nd}, 4^{th}, 5^{th}, 6^{th}, 8^{th}, 9^{th}, and 10^{th} subframes. The configured EPDCCH 1 is used in subframes 1, 2, 4, 5, 6, 8, 9, and 10, where a correspondence may use multiple manners, such as a BitMap manner. When the BitMap manner is used, the subframes may be represented by [1101110111], where 1 means being corresponding. When the Bit Map manner is used, a length of the Bit Map is 10 in this example; however, it may also be another possible value in an actual system. For example, when the data frame includes 20 subframes, the length of the Bit Map may be 20; when the data frame includes more subframes, the length of the Bit Map may be 30, 40, or the like.

The base station configures the EPDCCH 2, and makes it correspond to the 3^{rd} subframe, where a correspondence may use multiple manners, such as the BitMap manner. When the BitMap manner is used, the subframes may be represented by [0010000000], where 1 means being corresponding. When the BitMap manner is used, a length of the BitMap is 10 in this example; however, it may also be another possible value, such as 20, 30, 40, or the like, in an actual system.

The base station configures the EPDCCH 3, and makes it correspond to the 7^{th} subframe, where a correspondence may use multiple manners, such as a BitMap manner. When the BitMap manner is used, the subframes may be represented by [0000001000], where 1 means being corresponding. When the BitMap manner is used, a length of the Bit Map is 10 in this example; however, it may also be another possible value, such as 20, 30, 40, or the like, in an actual system.

The base station may generate the correspondence according to the foregoing corresponding process, where the correspondence includes the EPDCCH separately used by each subframe.

It should be noted that in this embodiment of the present invention, a manner in which the base station implements the correspondence is not limited to the BitMap method, and the manner further includes multiple implementation manners. It should be pointed out that an ultimate purpose for setting, by the base station, the correspondence between an EPDCCH and a subframe is to indicate the subframe (or subframes) in which the configured EPDCCH resource is used.

Another correspondence implementation manner is used as an example for description in the following: The base station may perform a remainder operation on a subframe number to separately generate a correspondence between each type of EPDCCH of at least two different types of EPDCCHs and a subframe, of a data frame, that uses the type of EPDCCH. The method for performing a remainder operation on a subframe number is described as follows: By performing a remainder operation on a number by using the subframe number, the base station makes the EPDCCH 1 correspond to a subframe that uses the EPDCCH 1. For example, a remainder operation is performed on the number 5 by using the subframe number, and subframes whose remainders are 2 and 3 are obtained. In this case, subframes 2, 3, 7, and 8 are to-be-obtained subframes that use the EPDCCH 1. Therefore, the generated correspondence may include 5 and {2, 3}. After receiving the correspondence, the UE can restore the subframes 2, 3, 7, and 8; therefore, the UE can learn that the subframes 2, 3, 7, and 8 use the EPDCCH 1. Likewise, the base station may also perform a remainder operation on the number 5, and obtain subframes whose remainder is 4. In this case, subframes 4 and 9 are to-be-obtained subframes, and therefore, the generated correspondence may include 5 and {4}. After receiving the correspondence, the UE may restore the subframes 4 and 9.

Alternatively, the base station may also perform a remainder operation on a frame number to separately generate a correspondence between each type of EPDCCH of at least two different types of EPDCCHs and a subframe, of a data frame, that uses the type of EPDCCH. The method for performing a remainder operation on a frame number is described as follows: By performing a remainder operation on a number by using the frame number, the base station makes the EPDCCH 1 correspond to a subframe that uses the EPDCCH 1. For example, a remainder operation is performed on the number 5 by using the frame number, and frames whose remainders are 4 are obtained. In this case, frames 4, 9, 14, and 19 are to-be-obtained frames. It should be noted herein that one frame generally includes 10 subframes. In this implementation method, all 10 subframes included in each of the frames 4, 9, 14, 19, and the like that satisfy the remainder operation performed on the frame number all correspond to the configured EPDCCH 1. Therefore, the generated correspondence may include 5 and {4}. After receiving the correspondence, the UE may restore the subframes 4, 9, 14, and 19. The method for performing a remainder operation on a frame number may also be: performing a remainder operation on a number by using the frame number, and further specifying subframes in the frame that use the EPDCCH. For example, a remainder operation is performed on the number 5 by using the frame number, subframes whose remainders are 4 are obtained, and it is specified that the 7^{th} and 8^{th} subframes in the frames use the EPDCCH 1. In this case, frames 4, 9, 14, and 19 are to-be-obtained frames. In addition, among 10 subframes included in each of the frames 4, 9, 14, 19, and the like that satisfy the remainder operation performed on the frame number, only the 7^{th} and 8^{th} subframes correspond to the configured EPDCCH 1. Therefore, the generated correspondence may include 5 and {4} and corresponding subframes {7, 8} in each subframe.

302. The base station delivers the correspondence between an EPDCCH and a subframe to the UE, so that the UE obtains, according to the correspondence between an EPDCCH and a subframe, an EPDCCH used by each subframe of the data frame.

In this embodiment of the present invention, after the base station generates the correspondence in step 301, the base station delivers the correspondence to the UE. Then, the UE can obtain, according to the correspondence, different EPDCCHs configured for all subframes.

It should be noted that the base station may deliver the correspondence to the user equipment UE in the following specific manners: By using radio resource control protocol (RRC, Radio Resource Control) signaling, the base station sends the correspondences between the different EPDCCHs and the subframes to the UE. For a specific frame format structure of the RRC signaling, refer to related descriptions in the prior art, and details are not described herein again. Certainly, the base station in this embodiment of the present invention may also use other higher-layer signaling to send the correspondence to the UE. For example, the base station uses master information block (MIB, Master Information Block) signaling to send the correspondences between the different EPDCCHs and the subframes to the UE, or the base station uses system information block (SIB, System Information Block) signaling to send the correspondences between the different EPDCCHs and the subframes to the UE. The description herein is for illustration only but not for limitation.

In this embodiment of the present invention, a base station generates correspondences between different EPDCCHs and subframes for each UE, where the base station configures at least two different types of EPDCCHs for multiple subframes of a data frame. Finally, the base station sends the correspondences to the UE, and the UE can obtain, according to the correspondences, the different EPDCCHs used by the multiple subframes. Because the base station configures at least two different types of EPDCCHs for multiple subframes, instead of a unified default EPDCCH used by all the subframes, different EPDCCHs can be delivered according to different subframe configurations of specific subframes, thereby avoiding an EPDCCH error.

The foregoing embodiments describe an enhanced physical downlink control channel transmission method provided in an embodiment of the present invention, and the following describes another enhanced physical downlink control channel transmission method provided in an embodiment of the present invention. As shown in FIG. 8, the method may specifically include the following steps:

801. A base station generates a correspondence between a first subframe and a first EPDCCH for each user equipment UE, where the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station.

It should be noted that in this embodiment of the present invention, the base station traverses all subframes of the data frame first, and classifies all the subframes into two types of subframes: a first subframe and a second subframe. Specifically, a preset condition for the subframes may be set on a base station side beforehand. The preset condition may be set according to subframe configurations of specific subframes. A subframe that satisfies the preset condition is defined as the first subframe, and a subframe except the subframe that satisfies the preset condition is defined as the second subframe. The following is described by using an example, which is not construed as a limitation herein. For example, the preset condition is set as a subframe on which a CSI-RS is located. That is, when the 3^{rd} subframe of the data frame is a CSI-RS subframe, the CSI-RS subframe may be defined as the first subframe. Likewise, the preset condition may also be set as a subframe on which a PMCH is located. That is, when the 7^{th} subframe of the data frame is a PMCH subframe, the PMCH subframe may be defined as the first subframe. Likewise, the preset condition may also be set as a subframe on which the PMCH is located or a subframe on which the CSI-RS is located. That is, when either of them is satisfied, it is also deemed that the data frame includes a subframe that satisfies the preset condition, that is, the first subframe.

The base station generates the correspondence between the first subframe and the first EPDCCH for each UE. It should be noted that the first subframe is a subframe among the multiple subframes of the data frame, the first EPDCCH is different from the second EPDCCH corresponding to the second subframe, the second subframe is a subframe except the first subframe among the multiple subframes of the data frame, and the second EPDCCH is the default EPDCCH of the base station.

This embodiment of the present invention may further include: generating, by the base station, a correspondence between the second subframe and the second EPDCCH for each UE, where the second subframe is a subframe that does not include the first subframe of the data frame and needs to use the EPDCCH. The base station classifies all subframes of one data subframe into a first subframe that satisfies the preset condition and a second subframe that needs to use the EPDCCH, where the second subframe is a subframe except the subframe that satisfies the preset condition; the base station then configures different EPDCCHs for the classified different subframes, generates a correspondence between the first subframe and the first EPDCCH, and generates a correspondence between the second subframe and the second EPDCCH.

It should be noted that in this embodiment of the present invention, the subframe that needs to use the EPDCCH refers to a subframe, of the data frame, that needs to use the EPDCCH on the subframe. The base station generates the correspondence between the second subframe and the second EPDCCH only for the second subframe that does not satisfy the preset condition but needs to use the EPDCCH. For example, a data frame includes 10 subframes, where subframe 1 and subframe 10 do not transmit the EPDCCH, subframes 2, 4, 5, 6, 7, 8, and 9 are second subframes that do not satisfy the preset condition but need to use the EPDCCH, and subframe 3 is the first subframe that satisfies the preset condition. The base station does not need to configure the EPDCCH for the subframe 1 and the subframe 10, but configures the second EPDCCH for the subframes 2, 4, 5, 6, 7, 8, and 9 to generate correspondences between the subframes 2, 4, 5, 6, 7, 8, and 9 and the second EPDCCH, and configures the first EPDCCH for the subframe 3 to generate a correspondence between the subframe 3 and the first EPDCCH.

It should be noted that in this embodiment of the present invention, the first EPDCCH and the second EPDCCH represent different EPDCCHs, where "first" and "second" do not denote any time sequence relationship or logical relationship, but are used to merely denote different EPDCCHs, and they are merely illustrative here.

It should be noted that in this embodiment of the present invention, as a practicable manner, the first EPDCCH may also be understood as an "exceptional EPDCCH", and the second EPDCCH may be understood as a "default EPDCCH". That is, the base station uses the default EPDCCH for all subframes, of the data frame, except a subframe that satisfies the preset condition, and uses the exceptional EPDCCH for the subframe that satisfies the preset condition, thereby reducing workloads of configuring an EPDCCH multiple times and improving configuration efficiency.

Preferably, in this embodiment of the present invention, each EPDCCH of the first EPDCCH and the second EPDCCH includes at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, where that configuration parameters are different means that content of at least one type of configuration parameter is different among all configuration parameters of the first EPDCCH and the second EPDCCH.

For use of different configuration parameters to indicate different EPDCCHs, refer to the descriptions in the foregoing embodiment, and details are not described herein again.

A detailed application example is used for description in the following:

The base station uses a manner in which a default configuration and an exceptional configuration are used. The frame structure diagram of the data frame shown in FIG. 7 is also used here. The EPDCCH 1 is configured for the 1^{st}, 2^{nd}, 4^{th}, 5^{th}, 6^{th}, 8^{th}, 9^{th}, and 10^{th} subframes to generate correspondences between the 1^{st}, 2^{nd}, 4^{th}, 5^{th}, 6^{th}, 8^{th}, 9^{th}, and 10^{th} subframes and the EPDCCH 1; the EPDCCH 2 is configured for the 3^{rd} subframe to generate a correspondence between the 3^{rd} subframe and the EPDCCH 2; the EPDCCH 3 is configured for the 7^{th} subframe to generate a correspondence between the 7^{th} subframe and the EPDCCH 2.

The base station configures the EPDCCH 1, and sets the configuration as the default configuration. That is, for a subframe on which EPDCCH detection needs to be performed, this configuration is used if no exceptional configuration exists.

The base station configures the exceptional EPDCCH 2, and sets a condition for the exceptional configuration. The exception condition herein may use multiple manners. For example, "the subframe 3" constitutes the exception condition, that is, the EPDCCH 2 is used on the subframe 3. The exception condition may use a BitMap manner. When the BitMap manner is used, the subframes may be represented by [0010000000], where 1 means being corresponding. When the BitMap manner is used, a length of the BitMap is 10 in this example; however, it may also be another possible value, such as 20, 30, 40, or the like, in an actual system. In this example, "a subframe on which a CSI-RS is located" may also be used as the exception condition, that is, the EPDCCH 2 is used on the "subframe on which the CSI-RS is located".

The base station configures the exceptional EPDCCH 3, and sets a condition for the exceptional configuration. The exception condition herein may use multiple manners. For example, "the subframe 7" constitutes the exception condition, that is, the EPDCCH 3 is used on the subframe 7. The exception condition may use the BitMap manner. When the BitMap manner is used, the subframes may be represented by [0000001000]. When the Bit Map manner is used, a length of the Bit Map is 10 in this example; however, it may also be another possible value, such as 20, 30, 40, or the like, in an actual system. In this example, "a subframe on which a PMCH is located" may also be used as the exception condition, that is, the EPDCCH 3 is used on "the subframe on which the PMCH is located".

It should be noted that the base station only needs to generate a correspondence between the configured first EPDCCH and the subframe that uses the first EPDCCH, and does not need to generate a correspondence between the second EPDCCH and the subframe that uses the second EPDCCH. The base station side and a user equipment side have negotiated the default EPDCCH beforehand, and the base station side and the user equipment side have learned configuration parameters of the default EPDCCH; therefore, when the second EPDCCH is configured for the subframe on the base station side, the user equipment side can learn an EPDCCH to be used by the subframe that uses the second EPDCCH, without a need for the base station to generate a correspondence for the second EPDCCH.

It should be noted that in this embodiment of the present invention, the base station may implement the correspondence in multiple manners. As one of the implementation manners, step 801 may specifically include:
generating, by the base station, the correspondence between the first subframe and the first EPDCCH by using a bitmap (BitMap) method; or
generating, by the base station, the correspondence between the first subframe and the first EPDCCH by performing a remainder operation on a subframe number; or
generating, by the base station, the correspondence between the first subframe and the first EPDCCH by performing a remainder operation on a frame number.

The BitMap is to use a bit to mark a type of EPDCCH and a subframe that uses the type of EPDCCH correspondingly.

802. The base station delivers the correspondence between the first subframe and the first EPDCCH to the UE.

It should be noted that the base station may deliver the correspondence to the user equipment UE in the following specific manners: By using radio resource control protocol (RRC, Radio Resource Control) signaling, the base station sends the correspondence between the first subframe and the first EPDCCH to the UE. For a specific frame format structure of the RRC signaling, refer to related descriptions in the prior art, and details are not described herein again. In addition, the base station may send the correspondence between the first subframe and the first EPDCCH to the UE by using master information block MIB signaling, or the base station may send the correspondence between the first subframe and the first EPDCCH to the UE by using system information block SIB signaling.

It should be noted that step 802 is similar to step 302 described in the foregoing embodiment, and details are not described herein again.

In this embodiment of the present invention, a base station generates a correspondence between a first subframe and a first EPDCCH for each UE, where the base station configures the first EPDCCH for the first subframe of a data frame and generates the correspondence between the first subframe and the first EPDCCH, and the first EPDCCH is different from a second EPDCCH; then the base station sends the correspondence between the first subframe and the first EPDCCH to the UE, and the UE can obtain, according to the correspondence between the first subframe and the first EPDCCH, the first EPDCCH used by the first subframe. Because the base station configures the first EPDCCH and the second EPDCCH that are different from each other for subframes, instead of a unified default EPDCCH used by all the subframes, different EPDCCHs can be delivered according to different subframe configurations of specific subframes, thereby avoiding an EPDCCH error.

The foregoing embodiments describe, on a base station side, an enhanced physical downlink control channel transmission method provided in an embodiment of the present invention. The following describes, on a user equipment side that interacts with the base station, an enhanced physical downlink control channel transmission method provided in an embodiment of the present invention. The method is corresponding to the base station described in the embodiment shown in FIG. 3. As shown in FIG. 9, the method may primarily include the following steps:

901. A user equipment UE receives a correspondence between an EPDCCH and a subframe, where the correspondence is sent by a base station and includes at least two different types of EPDCCHs and a subframe corresponding to each type of EPDCCH, and the subframes are multiple subframes of a data frame.

In the embodiments of the present invention, in step 302 of the embodiment shown in FIG. 3, the base station sends the correspondence to the user equipment; in this embodiment, the user equipment receives the correspondence. For description of the correspondence, refer to the description in the foregoing embodiment, and details are not described herein again.

902. The UE separately obtains, according to the correspondence, an EPDCCH used by each subframe of the data frame.

After receiving the correspondence, the UE parses the correspondence so as to obtain, from the correspondence, the EPDCCH used by each subframe of the data frame. In this way, it is implemented that the base station configures at least two different types of EPDCCHs and the user equipment obtains the different EPDCCHs are separately used on which subframes.

An example is used for description in the following. It is assumed that the correspondence includes: In the data frame, an EPDCCH 1 is used on the 1^{st}, 2^{nd}, 4^{th}, 5^{th}, 6^{th}, 8^{th}, 9^{th}, and 10^{th} subframes, an EPDCCH 2 is used on the 3^{rd} subframe, and an EPDCCH 3 is used on the 7^{th} subframe; therefore, the user equipment parses the correspondence so as to obtain the EPDCCH used by each subframe, for example, the EPDCCH 1 used by the 1^{st} subframe, and the EPDCCH 1 used by the 2^{nd} subframe.

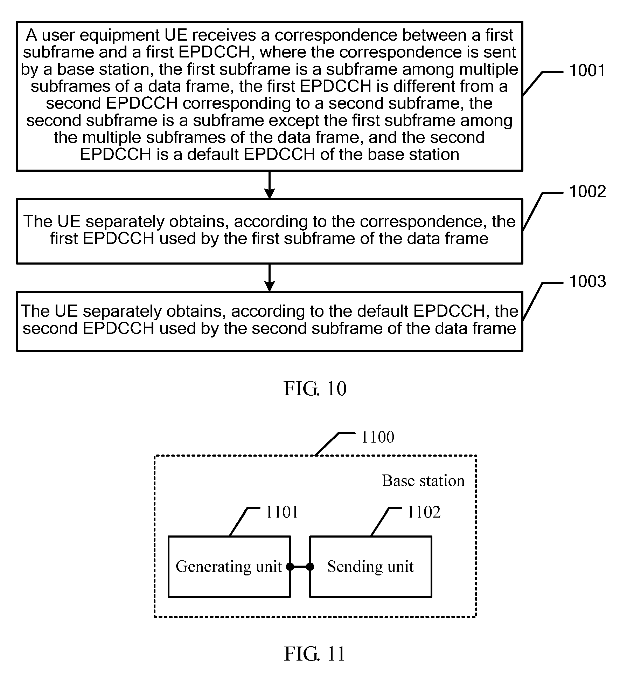

The following describes, on a user equipment side that interacts with the base station, an enhanced physical downlink control channel transmission method provided in an embodiment of the present invention. The method is corresponding to the base station described in the embodiment shown in FIG. 8. As shown in FIG. 10, the method may primarily include the following steps:

1001. A user equipment UE receives a correspondence between a first subframe and a first EPDCCH, where the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station.

In the embodiments of the present invention, in step 802 of the embodiment shown in FIG. 8, the base station sends the correspondence to the user equipment; in this embodiment, the user equipment receives the correspondence. For description of the correspondence, refer to the description in the foregoing embodiment, and details are not described herein again.

1002. The UE separately obtains, according to the correspondence, the first EPDCCH used by the first subframe of the data frame.

Specifically, after receiving the correspondence, the UE parses the correspondence so as to obtain, from the correspondence, the first EPDCCH used by the first subframe, of the data frame, that satisfies a preset condition.

1003. The UE separately obtains, according to the default EPDCCH, the second EPDCCH used by the second subframe of the data frame.

After step 1002 and step 1003 are completed, it is implemented that the base station configures at least two different types of EPDCCHs and the user equipment obtains the different EPDCCHs are separately used on which subframes.

It should be noted that the base station herein only needs to generate a correspondence between the configured first EPDCCH and the subframe that uses the first EPDCCH and then sends the correspondence to the UE, and does not need to generate a correspondence between the second EPDCCH and the subframe that uses the second EPDCCH. For example, the correspondence between the second subframe and the second EPDCCH is a default configuration. A base station side and the user equipment side have negotiated the default EPDCCH beforehand, and the base station side and the user equipment side have learned configuration parameters of the default EPDCCH; therefore, when the second EPDCCH is configured for the subframe on the base station side, the user equipment side can learn an EPDCCH to be used by the subframe that uses the second EPDCCH, without a need for the base station to generate a correspondence for the second EPDCCH.

The foregoing embodiments describe an enhanced physical downlink control channel transmission method provided in an embodiment of the present invention, and the following describes a base station that uses the method. In an actual application, the enhanced physical downlink control channel transmission method provided in the embodiment of the present invention is specifically implemented by the base station, and the enhanced physical downlink control channel transmission is implemented by means of software or hardware integration. In this embodiment of the present invention, an apparatus corresponding to the method described in the foregoing method embodiments is described. For a detailed execution method of each unit, reference may be made to the foregoing method embodiments, and only content of related units is described herein. Details are described as follows:

As shown in FIG. 11, a base station 1100 provided in an embodiment of the present invention includes:
a generating unit 1101, configured to generate a correspondence between an enhanced physical downlink control channel EPDCCH and a subframe for each user equipment UE, where the correspondence between an EPDCCH and a subframe includes at least two different types of EPDCCHs and a subframe corresponding to each type of EPDCCH, and the subframes are multiple subframes of a data frame; and
a sending unit 1102, configured to deliver the correspondence between an EPDCCH and a subframe to the user equipment UE, so that the UE obtains, according to the correspondence between an EPDCCH and a subframe, an EPDCCH used by each subframe of the data frame.

It should be noted that, in this embodiment of the present invention, the two different types of EPDCCHs included in the correspondence generated by the generating unit are specifically that configuration parameters of the two types of EPDCCHs are different, where each type of EPDCCH includes at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, and that the configuration parameters are different means that content of at least one type of configuration parameter is different among all configuration parameters of the two types of EPDCCHs.

The generating unit 1101 provided in this embodiment of the present invention is specifically configured to separately generate, by using a bitmap BitMap method, a correspondence between each type of EPDCCH of the at least two different types of EPDCCHs and a subframe, of the data frame, that uses the type of EPDCCH; or
the generating unit 1101 is specifically configured to separately generate, by performing a remainder operation on a subframe number, a correspondence between each type of EPDCCH of the at least two different types of EPDCCHs and a subframe, of the data frame, that uses the type of EPDCCH; or
the generating unit 1101 is specifically configured to separately generate, by performing a remainder operation on a frame number, a correspondence between each type of EPDCCH of the at least two different types of EPDCCHs and a subframe, of the data frame, that uses the type of EPDCCH.

It should be noted that, for the sending unit 1102 provided in this embodiment of the present invention, as a practicable manner, the sending unit 1102 is specifically configured to send the correspondence between an EPDCCH and a subframe to the UE by using radio resource control protocol RRC signaling; or the sending unit 1102 is specifically configured to send the correspondence between an EPDCCH and a subframe to the UE by using master information block MIB signaling; or the sending unit 1102 is specifically configured to send the correspondence between an EPDCCH and a subframe to the UE by using system information block SIB signaling.

It should be noted that content such as information exchange between the modules/units of the foregoing apparatus and the execution processes thereof is based on the same idea as that of the method embodiments of the present invention, and produces the same technical effects as the method embodiments of the present invention. For the specific content, reference may be made to the description in the method embodiment shown in FIG. 3, and the details are not described herein again.

In this embodiment of the present invention, a generating unit generates a correspondence between an EPDCCH and a subframe for each UE, where the generating unit configures at least two different types of EPDCCHs for multiple subframes of a data frame. Finally, a sending unit sends the correspondence to the UE, and the UE can obtain, according to the correspondence, the different EPDCCHs used by the multiple subframes. Because the base station configures at least two different types of EPDCCHs for multiple subframes, instead of a unified default EPDCCH used by all the subframes, different EPDCCHs can be delivered according to different subframe configurations of specific subframes, thereby avoiding an EPDCCH error.

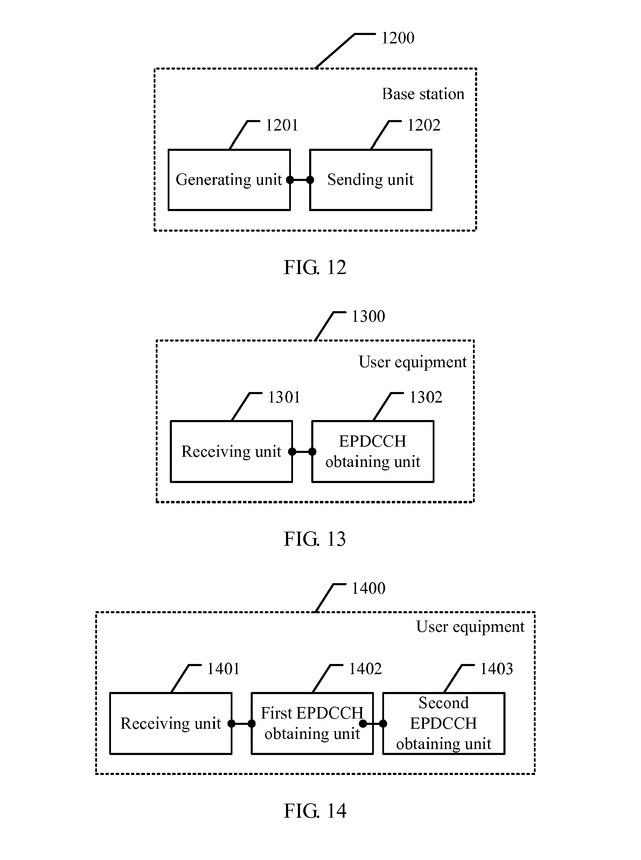

The following describes another base station provided in an embodiment of the present invention. As shown in FIG. 12, a base station 1200 includes:
a generating unit 1201, configured to generate a correspondence between a first subframe and a first enhanced physical downlink control channel EPDCCH for each user equipment UE, where the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station; and
a sending unit 1202, configured to deliver the correspondence between the first subframe and the first EPDCCH to the UE.

It should be noted that the generating unit 1201 provided in this embodiment of the present invention is further configured to generate a correspondence between the second subframe and the second EPDCCH for each UE, where the second subframe is a subframe that does not include the first subframe of the data frame and needs to use the EPDCCH.

It should be noted that configuration parameters of the first EPDCCH and the second EPDCCH included in the correspondence generated by the generating unit 1201 are different; each EPDCCH of the first EPDCCH and the second EPDCCH includes at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, where that configuration parameters are different means that content of at least one type of configuration parameter is different among all configuration parameters of the first EPDCCH and the second EPDCCH.

The generating unit 1201 provided in this embodiment of the present invention is specifically configured to generate the correspondence between the first subframe and the first EPDCCH by using a bitmap BitMap method; or the generating unit 1201 is specifically configured to generate the correspondence between the first subframe and the first EPDCCH by performing a remainder operation on a subframe number; or the generating unit 1201 is specifically configured to generate the correspondence between the first subframe and the first EPDCCH by performing a remainder operation on a frame number.

It should be noted that the sending unit 1202 provided in this embodiment of the present invention is specifically configured to send the correspondence between the first subframe and the first EPDCCH to the UE by using radio resource control protocol RRC signaling; or the sending unit 1202 is specifically configured to send the correspondence between the first subframe and the first EPDCCH to the UE by using master information block MIB signaling; or the sending unit 1202 is specifically configured to send the correspondence between the first subframe and the first EPDCCH to the UE by using system information block SIB signaling.

It should be noted that content such as information exchange between the modules/units of the foregoing apparatus and the execution processes thereof is based on the same idea as that of the method embodiments of the present invention, and produces the same technical effects as the method embodiments of the present invention. For the specific content, reference may be made to the description in the method embodiment shown in FIG. 8, and the details are not described herein again.

In this embodiment of the present invention, a generating unit generates a correspondence between a first subframe and a first EPDCCH for each UE, where the generating unit configures the first EPDCCH for the first subframe of a data frame and generates the correspondence between the first subframe and the first EPDCCH, and the first EPDCCH is different from a second EPDCCH. Then the generating unit sends the correspondence between the first subframe and the first EPDCCH to the UE, and the UE can obtain, according to the correspondence between the first subframe and the first EPDCCH, the first EPDCCH used by the first subframe. Because the base station configures the first EPDCCH and the second EPDCCH that are different from each other for subframes, instead of a unified default EPDCCH used by all the subframes, different EPDCCHs can be delivered according to different subframe configurations of specific subframes, thereby avoiding an EPDCCH error.

The foregoing embodiment describes a base station, and the following describes a user equipment that interacts with the base station, where the user equipment is corresponding to the base station described in the embodiment shown in FIG. 11. As shown in FIG. 13, a user equipment 1300 primarily includes the following units:
a receiving unit 1301, configured to receive a correspondence between an EPDCCH and a subframe, where the correspondence is sent by a base station and includes at least two different types of EPDCCHs and a subframe corresponding to each type of EPDCCH, and the subframes are multiple subframes of a data frame; and
an EPDCCH obtaining unit 1302, configured to separately obtain, according to the correspondence, an EPDCCH used by each subframe of the data frame.

The UE can obtain, according to the correspondence, different EPDCCHs used by multiple subframes. Because the base station configures at least two different types of EPDCCHs for multiple subframes, instead of a unified default EPDCCH used by all the subframes, different EPDCCHs can be delivered according to different subframe configurations of specific subframes, thereby avoiding an EPDCCH error.

The foregoing embodiment describes a user equipment, and the following describes another user equipment that interacts with a base station, where the user equipment is corresponding to the base station described in the embodiment shown in FIG. 12. A user equipment 1400 may primarily include the following units:
a receiving unit 1401, configured to receive a correspondence between a first subframe and a first EPDCCH, where the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station;
a first EPDCCH obtaining unit 1402, configured to separately obtain, according to the correspondence, the first EPDCCH used by the first subframe of the data frame; and
a second EPDCCH obtaining unit 1403, configured to separately obtain, according to the default EPDCCH, the second EPDCCH used by the second subframe of the data frame.

The UE can obtain, according to the correspondence, different EPDCCHs used by multiple subframes. Because the base station configures at least two different types of EPDCCHs for multiple subframes, instead of a unified default EPDCCH used by all the subframes, different EPDCCHs can be delivered according to different subframe configurations of specific subframes, thereby avoiding an EPDCCH error.

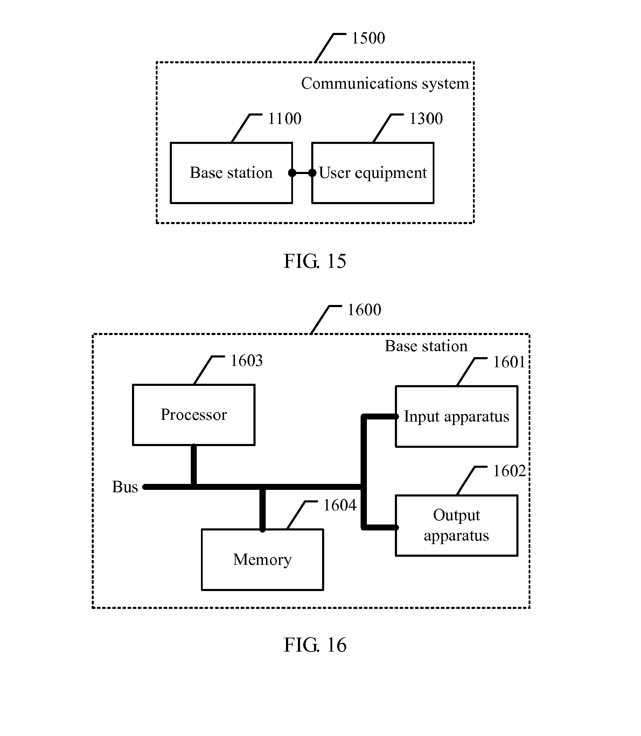

The following describes a communications system provided in an embodiment of the present invention. As shown in FIG. 15, a communications system 1500 primarily includes:
the base station 1100 shown in FIG. 11 and the user equipment 1300 shown in FIG. 13.

For detailed descriptions of the base station and the user equipment, refer to the foregoing embodiments, and details are not described herein again.

The following describes another communications system provided in an embodiment of the present invention, where the communications system primarily includes:
the base station shown in FIG. 12 and the user equipment shown in FIG. 14.

For detailed descriptions of the base station and the user equipment, refer to the foregoing embodiments, and details are not described herein again.

The following describes another base station provided in an embodiment of the present invention. As shown in FIG. 16, a base station 1600 includes:
an input apparatus 1601, an output apparatus 1602, a processor 1603, and a memory 1604 (the number of processors 1603 in a positioning apparatus 1600 may be one or more, and one processor is used as an example in FIG. 16). In some embodiments of the present invention, the input apparatus 1601, the output apparatus 1602, the processor 1603, and the memory 1604 may be connected by using a bus or another means. The connection by using a bus is used as an example in FIG. 16.

The processor 1603 is configured to perform the following steps: generating a correspondence between an enhanced physical downlink control channel EPDCCH and a subframe for each user equipment UE, where the correspondence between an EPDCCH and a subframe includes at least two different types of EPDCCHs and a subframe corresponding to each type of EPDCCH, and the subframes are multiple subframes of a data frame.

The output apparatus 1602 is configured to deliver the correspondence between an EPDCCH and a subframe to the UE, so that the UE obtains, according to the correspondence between an EPDCCH and a subframe, an EPDCCH used by each subframe of the data frame.

The following describes another base station provided in an embodiment of the present invention. The base station includes: an input apparatus, an output apparatus, a processor, and a memory (the number of processors in a positioning apparatus may be one or more). In some embodiments of the present invention, the input apparatus, the output apparatus, the processor, and the memory may be connected by using a bus or another means.

The processor is configured to perform the following steps: generating a correspondence between a first subframe and a first enhanced physical downlink control channel EPDCCH for each user equipment UE, where the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station.

The output apparatus is configured to deliver the correspondence between the first subframe and the first EPDCCH to the UE.

A person of ordinary skill in the art may understand that all or some of the steps in the methods in the foregoing embodiments may be implemented by a program instructing relevant hardware. The program may be stored in a computer-readable storage medium. The storage medium mentioned above may be a read-only memory, a magnetic disk, optical disc, or the like.

The foregoing describes in detail an enhanced physical downlink control channel transmission method and apparatus, and a communications system according to the present invention. A person of ordinary skill in the art may, according to the idea of the embodiments of the present invention, make modifications with respect to the specific implementation manners and application scope. In conclusion, the content of this specification shall not be construed as a limitation on the present invention.

## Claims

1. An enhanced physical downlink control channel transmission method, comprising:
generating, by a base station, a correspondence between an enhanced physical downlink control channel EPDCCH and a subframe for each user equipment UE, wherein the correspondence between an EPDCCH and a subframe comprises at least two different types of EPDCCHs and a subframe corresponding to each type of EPDCCH, and the subframes are multiple subframes of a data frame; and
delivering, by the base station, the correspondence between an EPDCCH and a subframe to the UE, so that the UE obtains, according to the correspondence between an EPDCCH and a subframe, an EPDCCH used by each subframe of the data frame.

2. The method according to claim 1, wherein the two different types of EPDCCHs are specifically that:
configuration parameters of the two types of EPDCCHs are different, wherein each type of EPDCCH comprises at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, and that configuration parameters are different means that content of at least one type of configuration parameter is different among all configuration parameters of the two types of EPDCCHs.

3. The method according to claim 1, wherein the correspondence between an EPDCCH and a subframe is indicated in a same table; or
the correspondence between an EPDCCH and a subframe is indicated in more than two tables separately according to different EPDCCHs.

4. The method according to any one of claims 1 to 3, wherein the generating, by a base station, a correspondence between an enhanced physical downlink control channel EPDCCH and a subframe for each user equipment UE comprises:
separately generating, by the base station by using a bitmap BitMap method, a correspondence between each type of EPDCCH of the at least two different types of EPDCCHs and a subframe, of the data frame, that uses the type of EPDCCH; or
separately generating, by the base station by performing a remainder operation on a subframe number, a correspondence between each type of EPDCCH of the at least two different types of EPDCCHs and a subframe, of the data frame, that uses the type of EPDCCH; or
separately generating, by the base station by performing a remainder operation on a frame number, a correspondence between each type of EPDCCH of the at least two different types of EPDCCHs and a subframe, of the data frame, that uses the type of EPDCCH.

5. The method according to any one of claims 1 to 3, wherein the delivering, by the base station, the correspondence between an EPDCCH and a subframe to the user equipment UE comprises:
sending, by the base station, the correspondence between an EPDCCH and a subframe to the UE by using radio resource control protocol RRC signaling; or
sending, by the base station, the correspondence between an EPDCCH and a subframe to the UE by using master information block MIB signaling; or
sending, by the base station, the correspondence between an EPDCCH and a subframe to the UE by using system information block SIB signaling.

6. An enhanced physical downlink control channel transmission method, comprising:
generating, by a base station, a correspondence between a first subframe and a first enhanced physical downlink control channel EPDCCH for each user equipment UE, wherein the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station; and
delivering, by the base station, the correspondence between the first subframe and the first EPDCCH to the UE.

7. The method according to claim 6, wherein the method further comprises:
generating, by the base station, a correspondence between the second subframe and the second EPDCCH for each UE, wherein the second subframe is a subframe that does not comprise the first subframe of the data frame and needs to use the EPDCCH.

8. The method according to claim 6, wherein the first subframe is a subframe that satisfies a preset condition among the multiple subframes of the data frame, and the second subframe is a subframe that does not satisfy the preset condition among the multiple subframes of the data frame.

9. The method according to claim 6, wherein configuration parameters of the first EPDCCH and the second EPDCCH are different; and
each EPDCCH of the first EPDCCH and the second EPDCCH comprises at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, wherein that configuration parameters are different means that content of at least one type of configuration parameter is different among all configuration parameters of the first EPDCCH and the second EPDCCH.

10. The method according to any one of claims 6 to 9, wherein the generating, by a base station, a correspondence between a first subframe and a first enhanced physical downlink control channel EPDCCH for each user equipment UE comprises:
generating, by the base station, the correspondence between the first subframe and the first EPDCCH by using a bitmap BitMap method; or
generating, by the base station, the correspondence between the first subframe and the first EPDCCH by performing a remainder operation on a subframe number; or
generating, by the base station, the correspondence between the first subframe and the first EPDCCH by performing a remainder operation on a frame number.

11. The method according to any one of claims 6 to 9, wherein the delivering, by the base station, the correspondence between the first subframe and the first EPDCCH to the UE comprises:
sending, by the base station, the correspondence between the first subframe and the first EPDCCH to the UE by using radio resource control protocol RRC signaling; or
sending, by the base station, the correspondence between the first subframe and the first EPDCCH to the UE by using master information block MIB signaling; or
sending, by the base station, the correspondence between the first subframe and the first EPDCCH to the UE by using system information block SIB signaling.

12. An enhanced physical downlink control channel transmission method, comprising:
receiving, by a user equipment UE, a correspondence between an enhanced physical downlink control channel EPDCCH and a subframe, wherein the correspondence is sent by a base station and comprises at least two different types of EPDCCHs and a subframe corresponding to each type of EPDCCH, and the subframes are multiple subframes of a data frame; and
separately obtaining, by the UE according to the correspondence, an EPDCCH used by each subframe of the data frame.

13. An enhanced physical downlink control channel transmission method, comprising:
receiving, by a user equipment UE, a correspondence between a first subframe and a first enhanced physical downlink control channel EPDCCH, wherein the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station;
separately obtaining, by the UE according to the correspondence, the first EPDCCH used by the first subframe of the data frame; and
separately obtaining, by the UE according to the default EPDCCH, the second EPDCCH used by the second subframe of the data frame.

14. Abase station, comprising:
a generating unit, configured to generate a correspondence between an enhanced physical downlink control channel EPDCCH and a subframe for each user equipment UE, wherein the correspondence between an EPDCCH and a subframe comprises at least two different types of EPDCCHs and a subframe corresponding to each type of EPDCCH, and the subframes are multiple subframes of a data frame; and
a sending unit, configured to deliver the correspondence between an EPDCCH and a subframe to the UE, so that the UE obtains, according to the correspondence between an EPDCCH and a subframe, an EPDCCH used by each subframe of the data frame.

15. The base station according to claim 14, wherein the two different types of EPDCCHs comprised in the correspondence generated by the generating unit are specifically that:
configuration parameters of the two types of EPDCCHs are different, wherein each type of EPDCCH comprises at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, and that the configuration parameters are different means that content of at least one type of configuration parameter is different among all configuration parameters of the two types of EPDCCHs.

16. The base station according to claim 14, wherein the correspondence generated by the generating unit is indicated in a same table, or is indicated in more than two tables separately according to different EPDCCHs.

17. The base station according to any one of claims 14 to 16, wherein
the generating unit is specifically configured to separately generate, by using a bitmap BitMap method, a correspondence between each type of EPDCCH of the at least two different types of EPDCCHs and a subframe, of the data frame, that uses the type of EPDCCH; or
the generating unit is specifically configured to separately generate, by performing a remainder operation on a subframe number, a correspondence between each type of EPDCCH of the at least two different types of EPDCCHs and a subframe, of the data frame, that uses the type of EPDCCH; or
the generating unit is specifically configured to separately generate, by performing a remainder operation on a frame number, a correspondence between each type of EPDCCH of the at least two different types of EPDCCHs and a subframe, of the data frame, that uses the type of EPDCCH.

18. The base station according to any one of claims 14 to 16, wherein the sending unit is specifically configured to send the correspondence between an EPDCCH and a subframe to the UE by using radio resource control protocol RRC signaling; or
the sending unit is specifically configured to send the correspondence between an EPDCCH and a subframe to the UE by using master information block MIB signaling; or
the sending unit is specifically configured to send the correspondence between an EPDCCH and a subframe to the UE by using system information block SIB signaling.

19. A base station, comprising:
a generating unit, configured to generate a correspondence between a first subframe and a first enhanced physical downlink control channel EPDCCH for each user equipment UE, wherein the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station; and
a sending unit, configured to deliver the correspondence between the first subframe and the first EPDCCH to the UE.

20. The base station according to claim 19, wherein the generating unit is further configured to generate a correspondence between the second subframe and the second EPDCCH for each UE, wherein the second subframe is a subframe that does not comprise the first subframe of the data frame and needs to use the EPDCCH.

21. The base station according to claim 19, wherein configuration parameters of the first EPDCCH and the second EPDCCH comprised in the correspondence generated by the generating unit are different; and
each EPDCCH of the first EPDCCH and the second EPDCCH comprises at least any one of the following types of configuration parameters: an EPDCCH scrambling sequence, a configuration of search space, the number of enhanced resource element groups EREGs that form an enhanced control channel element ECCE, a start symbol of an EPDCCH region, a scrambling sequence of a demodulation reference signal DMRS, and a definition of an EPDCCH quasi co-location QCL behavior, wherein that configuration parameters are different means that content of at least one type of configuration parameter is different among all configuration parameters of the first EPDCCH and the second EPDCCH.

22. The base station according to any one of claims 19 to 21, wherein the generating unit is specifically configured to generate the correspondence between the first subframe and the first EPDCCH by using a bitmap BitMap method; or
the generating unit is specifically configured to generate the correspondence between the first subframe and the first EPDCCH by performing a remainder operation on a subframe number; or
the generating unit is specifically configured to generate the correspondence between the first subframe and the first EPDCCH by performing a remainder operation on a frame number.

23. The base station according to any one of claims 19 to 21, wherein the sending unit is specifically configured to send the correspondence between the first subframe and the first EPDCCH to the UE by using radio resource control protocol RRC signaling; or
the sending unit is specifically configured to send the correspondence between the first subframe and the first EPDCCH to the UE by using master information block MIB signaling; or
the sending unit is specifically configured to send the correspondence between the first subframe and the first EPDCCH to the UE by using system information block SIB signaling.

24. A user equipment UE, comprising:
a receiving unit, configured to receive a correspondence between an enhanced physical downlink control channel EPDCCH and a subframe, wherein the correspondence is sent by a base station and comprises at least two different types of EPDCCHs and a subframe corresponding to each type of EPDCCH, and the subframes are multiple subframes of a data frame; and
an EPDCCH obtaining unit, configured to separately obtain, according to the correspondence, an EPDCCH used by each subframe of the data frame.

25. A user equipment UE, comprising:
a receiving unit, configured to receive a correspondence between a first subframe and a first enhanced physical downlink control channel EPDCCH, wherein the correspondence is sent by a base station, the first subframe is a subframe among multiple subframes of a data frame, the first EPDCCH is different from a second EPDCCH corresponding to a second subframe, the second subframe is a subframe except the first subframe among the multiple subframes of the data frame, and the second EPDCCH is a default EPDCCH of the base station;
a first EPDCCH obtaining unit, configured to separately obtain, according to the correspondence, the first EPDCCH used by the first subframe of the data frame; and
a second EPDCCH obtaining unit, configured to separately obtain, according to the default EPDCCH, the second EPDCCH used by the second subframe of the data frame.

26. A communications system, comprising:
the base station according to any one of claims 14 to 18 and the user equipment UE according to claim 24.

27. A communications system, comprising:
the base station according to any one of claims 19 to 23 and the user equipment UE according to claim 25.
